(19) Europäisches Patentamt
European Patent Office
Office européen des brevets

(11) **EP 4 625 037 A1**

(12) **EUROPEAN PATENT APPLICATION**
published in accordance with Art. 153(4) EPC

(43) Date of publication:
01.10.2025 Bulletin 2025/40

(51) International Patent Classification (IPC):
*G03B 17/02* (2021.01)     *G03B 3/10* (2021.01)
*G03B 13/34* (2021.01)     *G03B 5/06* (2021.01)
*H04N 23/54* (2023.01)     *H04N 23/55* (2023.01)
*G03B 13/36* (2021.01)     *G03B 17/12* (2021.01)

(21) Application number: 23895086.9

(52) Cooperative Patent Classification (CPC):
H04N 23/55; G03B 3/10; G03B 5/06; G03B 13/34;
G03B 13/36; G03B 17/02; G03B 17/12;
H04N 23/57

(22) Date of filing: 24.11.2023

(86) International application number:
PCT/KR2023/019138

(87) International publication number:
WO 2024/112159 (30.05.2024 Gazette 2024/22)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 24.11.2022 KR 20220159619
10.01.2023 KR 20230003638

(71) Applicant: **Samsung Electronics Co., Ltd.**
**Suwon-si, Gyeonggi-do 16677 (KR)**

(72) Inventors:
• **JANG, Youngsoo**
  **Suwon-si Gyeonggi-do 16677 (KR)**
• **PARK, Chiyoung**
  **Suwon-si Gyeonggi-do 16677 (KR)**

(74) Representative: **HGF**
**HGF Limited**
**1 City Walk**
**Leeds LS11 9DX (GB)**

(54) **CAMERA MODULE COMPRISING DAMPER**

(57)     An embodiment of the present disclosure may provide an electronic device comprising a camera module. The camera module may comprise: a camera housing; a lens assembly including at least one lens aligned along an optical axis; a focus adjustment driving unit (AF driving unit) for moving the lens assembly in the direction of the optical axis; an optical image stabilization driving unit (OIS driving unit) for moving the lens assembly in at least one direction intersecting the optical axis; a frame disposed within the camera housing and at least partially surrounding the focus adjustment driving unit and/or the optical image stabilization driving unit; and a damper having one end fixed to the frame or the camera housing and the other end having a shape elongated toward the camera housing, the damper bending in one direction when in contact with the camera housing.

FIG. 7

**Description**

[Technical Field]

The disclosure relates to a camera module and, particularly, to a camera module including a damper for reducing noise due to contact between components.

[Background Art]

With the development of digital camera manufacturing technology, an electronic device equipped with a compact and lightweight camera module has been used. Users may take advantage of various functionalities of an electronic device with camera modules, such as photographing, video recording, video call, augmented reality (AR), etc., in a convenient manner, while carrying it all the time. Typically, a camera module may include a lens assembly and an image sensor.

As it becomes more common to equip electronic devices with camera lens assemblies, efforts are now being made to downsize camera lens assemblies while also enhancing performance, such as image quality.

For example, auto-focus is among the techniques to allow the camera lens assembly a better performance. Autofocusing may move the lens positioned ahead of the image sensor along the optical axis depending on the distance from the subject, enabling a clear image to form on the image-forming surface of the image sensor.

Another example technology for enhancing the performance of the camera lens assembly is image stabilization. Image stabilization may also be referred to as a shake (or hand shake) function. The camera module may obtain stabilized images against disturbances by using the image stabilization function. Here, the disturbance may be the occurrence of various artifacts, such as blurring of the image obtained through the camera module due to slight shaking of the user's hand when taking a photo or video. The image stabilization function, i.e., a shake (or hand shake) correction function, may move the lens assembly included in the camera module on a plane perpendicular to the optical axis to compensate for limited movement of the electronic device due to the user's grip or the fixing device, thereby preventing or alleviating shakes in the captured image or video.

To perform the auto-focus function and image stabilization function, the camera module may include at least one coil and magnet. The coil to which current is applied may generate electromagnetic force through electromagnetic interaction with the magnet, and the camera module may perform an auto-focus function and/or shake correction function using the generated electromagnetic force. As a method for adjusting focus or correcting shakes by electromagnetic force, various methods, such as a lens shift that moves the lens assembly, a prism shift that moves the prism, a module tilt that tilts the camera module, and an image sensor shift that moves the image sensor, may apply.

The above-described information may be provided as background for the purpose of helping understanding of the disclosure. No claim or determination is made as to whether any of the foregoing is applicable as background art in relation to the disclosure.

[Detailed Description of the Invention]

[Technical Solution]

According to an embodiment, there may be provided an electronic device including a camera module. The camera module may include a camera housing, a lens assembly including at least one lens aligned along an optical axis, a focus adjustment driver (AF driver) moving the lens assembly in a direction of the optical axis, an image stabilization driver (OIS driver) moving the lens assembly in at least one direction crossing the optical axis, a frame disposed in the camera housing and at least partially surrounding the focus adjustment driver and/or the image stabilization driver and a damper having one end portion fixed to the frame or the camera housing and another end portion having a shape elongated toward the camera housing and configured to be bent in one direction based on the damper contacting the camera housing.

According to an embodiment of the disclosure, there may be provided a camera module comprising a camera housing, a lens assembly including at least one lens aligned along an optical axis, a carrier member configured to guide the lens assembly in an optical-axis direction and/or a direction crossing the optical axis, and a driving member including at least one coil, and at least one magnet and a plurality of guide balls disposed to at least partially face the at least one coil, and moving the carrier member in the optical-axis direction and the direction crossing the optical axis in a ball bearing manner, a frame disposed in the camera housing and at least partially surrounding the driving member, and a damper having one end portion fixed to the frame or the camera housing and another end portion having a shape elongated toward the camera housing and configured to be bent in one direction based on the damper contacting the camera housing.

[Brief Description of Drawings]

The foregoing and other aspects, configurations, and/or advantages of an embodiment of the disclosure will be more apparent from the following detailed description taken in conjunction with the accompanying drawings.

FIG. 1 is an exploded perspective view illustrating a camera module according to various embodiments of the disclosure;
FIG. 2 is a front view illustrating a camera module according to an embodiment of the disclosure;

FIG. 3 is a cross-sectional view of the camera module of FIG. 2, taken along direction A-A';

FIG. 4 is a cross-sectional view of the camera module of FIG. 2, taken along a direction parallel to the XY plane;

FIG. 5A is a view illustrating a state in which a damper is disposed on a second surface of a frame according to an embodiment of the disclosure;

FIG. 5B may illustrate a placement relationship between a camera housing and a frame in a cross section of the camera module of FIG. 5A, taken along direction B-B';

FIG. 6A is a view illustrating a state in which a damper is disposed on an inner surface of a camera housing according to an embodiment of the disclosure;

FIG. 6B may illustrate a placement relationship between a camera housing and a frame in a cross section of the camera module of FIG. 6A, taken along direction B-B';

FIG. 7 is a front view illustrating a damper according to an embodiment of the disclosure;

FIG. 8 is a view illustrating a state in which the damper of FIG. 7 is bent when contacting a cover plate of a camera housing;

FIG. 9A is a front view illustrating a damper according to an embodiment of the disclosure;

FIG. 9B is a view illustrating a state in which the damper of FIG. 9A is bent when contacting a cover plate of a camera housing; and

FIG. 10 is a block diagram illustrating an electronic device in a network environment according to an embodiment of the disclosure.

[Mode for Carrying out the Invention]

The following description taken in conjunction with the accompanying drawings may be presented to provide a comprehensive understanding of various implementations of the disclosure as defined by the claims and equivalents thereto. The specific embodiments disclosed in the following description entail various specific details to aid understanding, but are regarded as one of various embodiments. Accordingly, it will be apparent to those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe the various embodiments of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may have a meaning including one or more of the surfaces of a component.

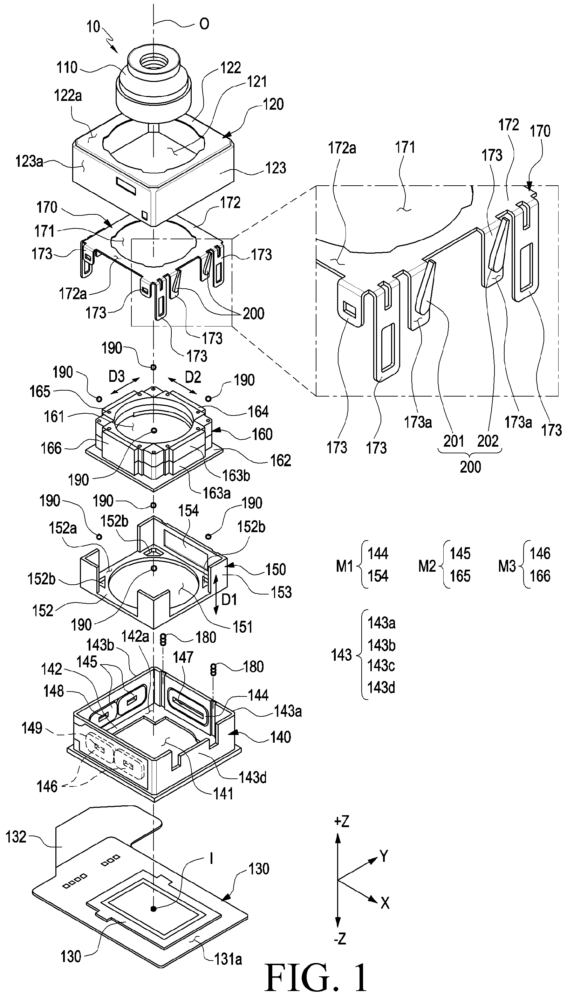

FIG. 1 is an exploded perspective view illustrating a camera module according to various embodiments of the disclosure.

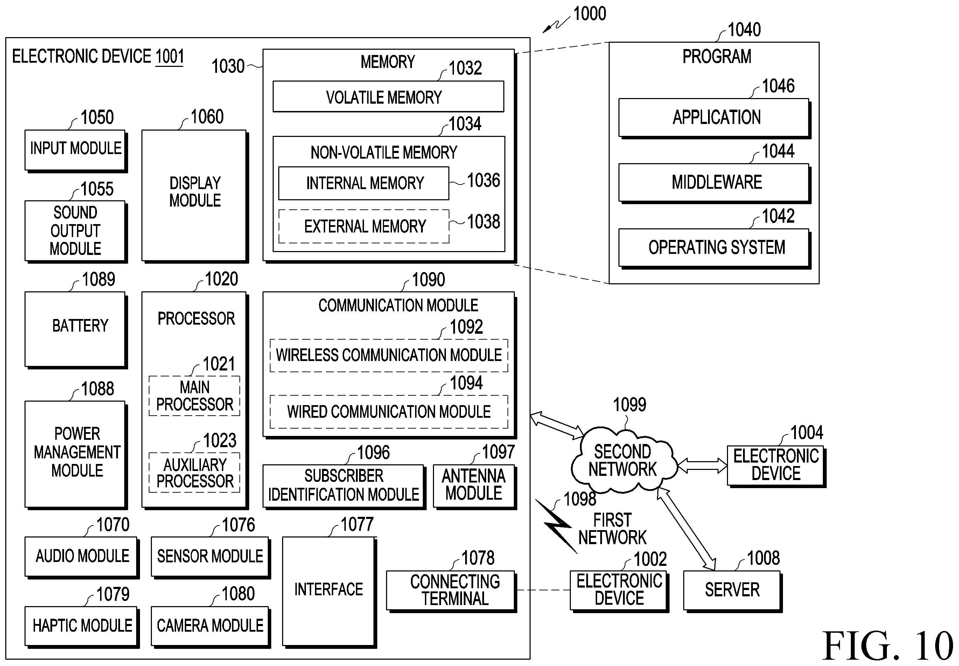

The camera module 10 is described below with reference to FIGS. 1 to 9B, but it should be noted that the category of the disclosure includes an electronic device (e.g., the electronic device 1001 of FIG. 10) as well as the camera module 10.

In the following detailed description of FIG. 1 and the subsequent figures, the length direction of the camera module 10 may be defined as the 'Y-axis direction', the width direction as the 'X-axis direction', and/or the height direction (the thickness direction) as the 'Z-axis direction'. In the following detailed description, the mentioned length direction, width direction, and/or height direction (or thickness direction) may indicate the length direction, the width direction, and/or the height direction (or thickness direction) of the camera module 10 or an electronic device including the camera module 10. In an embodiment, 'negative/positive (-/+)' may be mentioned together with the Cartesian coordinate system exemplified in the drawings with respect to the direction in which the component is oriented. For example, referring to FIG. 1, the front surface of the camera module 10 (the front surface 122a of the camera housing 120) may be defined as a 'surface facing in the +Z direction (or first direction),' and the rear surface may be defined as a 'surface facing in the -Z direction (or second direction)'. According to an embodiment, the arrangement relationship in the height direction of a component or another component, that is, the reference as to whether a component is on/under another component, may follow the +Z-axis direction/-Z-axis direction. In other words, when a component is disposed above another component, it may mean that the component is disposed on the +Z-axis direction with respect to the other component, and when a component is disposed under another component, it may mean that the component is disposed on the -Z-axis direction with respect to the other component. Meanwhile, it should be noted that although a component is disposed on or under another component, it does not necessarily mean that the entire component is disposed on or under the entire other component. For example, it should be noted that a portion of the component may be disposed on a portion of the other component while another portion of the component may be disposed under another portion of the other component. In the following description, it should be noted that when a component overlaps (or is stacked on) another component, the above description of the arrangement relationship in height direction may apply. In describing the direction, when 'negative/positive (-/+)' is not shown, it may be interpreted as including both the + direction and the - direction unless separately defined. For example, the 'X-axis direction' may be interpreted as including both the +X direction and the -X direction, and the 'Y-axis direction' may be interpreted as including both the +Y direction and the -Y direction. In describing the direction, facing in any one of the three axes of the orthogonal coordinate system may include facing in a direction parallel to the axis. For simplicity of description, this is based on the Cartesian coordinate system illustrated in the drawings, and it should be noted that descriptions of such directions or components do not limit various embodiments of the disclosure.

Referring to FIG. 1, the camera module 10 may include a lens assembly 110 including at least one lens, a camera housing 120, an image sensor 130, a first carrier 140, a second carrier 150, a third carrier 160, a frame 170, and/or a driving member M1, M2, and M3. Further, the camera module 10 may include at least one substrate (e.g., PCB 131) and/or at least one flexible circuit board (e.g., FPCB 132).

The camera housing 120 is a component forming the exterior of the camera module 10, and may be provided as a cover member for providing an inner space for accommodating components inside the camera module 10 and protecting internal components. According to an embodiment, the camera housing 120 may further include a base member forming a base in addition to the components illustrated in FIG. 1. According to an embodiment, if there is a component that generates electromagnetic waves among the components accommodated in the inner space provided by the camera housing 120, the camera housing 120 may at least partially provide an electromagnetic shielding structure. For example, the driving member M1, M2, and M3 may include a voice coil motor (VCM) that generates driving power using an electric or magnetic field, and the camera housing 120 may function as a shield can that shields electromagnetic waves generated from the voice coil motor.

The camera housing 120 may include a cover plate 122 and a side member (or side surface member) 123. According to an embodiment, the cover plate 122 may include a front surface 122a facing in a first direction and a rear surface 122b facing in a second direction opposite to the first direction. Further, the cover plate 122 may include an optical opening 121 formed through the front surface 122a and the rear surface 122b. The optical opening 121 may provide a space for accommodating the lens assembly 110, which is a component for moving or receiving light. According to an embodiment, the side member 123 may include a side surface 123a connected to the cover plate 122 and facing in a third direction substantially perpendicular to the first direction and the second direction. The camera housing 120 may include a cover plate 122 and a side member 123 to provide a space for accommodating the lens assembly and/or various components. Although FIG. 1 illustrates the camera housing 120 where the side member 123 is integrally connected from the cover plate 122, various embodiments included in the scope of the disclosure are not necessarily limited thereto, and additionally or generally, a form protruding from the base member may also be applied. As such, the camera housing 120 is not limited to any specific shape, but may have various shapes according to embodiments.

The lens assembly 110 may include at least one lens aligned along the optical axis O-I. Here, the optical axis O-I may refer to a virtual line passing through the center of the lens (centers of a plurality of lenses when there are the plurality of lenses) from the object (or external object) side O to the image side I of the image sensor. The lens assembly 110 may be at least partially accommodated in the camera housing 120. According to an embodiment, the lens assembly 110 may be at least partially accommodated in the camera housing 120 while being surrounded by a barrel structure. The lens assembly 110 may dispose externally incident light in an appropriate number according to specifications required by the camera module 10 or the electronic device. The number of lenses included in the lens assembly 110 may not be limited to any particular embodiment. According to an embodiment, the lens assembly 110 may be disposed to partially protrude toward the outside of the camera housing 120 while being at least partially accommodated in the camera housing 120. According to various embodiments of the disclosure, the lens assembly 110 may focus or guide light incident on the camera module 10 into the camera housing 301 while being fixedly disposed in the camera housing 120.

The image sensor 130 may include, e.g., a sensor such as a complementary metal-oxide semiconductor (CMOS) or a charge coupled device (CCD). The image sensor 130, however, is not limited thereto but may rather include various elements that convert light, e.g., an object image, into an electrical image signal. The image sensor 130 may detect brightness, contrast ratio information, or color information about the subject from the light which has been transmitted through the lens assembly 110, thereby obtaining an image for the object.

The image sensor 130 may be disposed on one surface 131a of the PCB 131 to face the lens assembly 110. According to an embodiment, the PCB 131 is a printed circuit board having the image sensor 130 disposed on one surface 131a thereof, and may have a plate shape parallel to a plane (hereinafter, referred to as an "XY plane") formed by the X-axis and the Y-axis among the spatial coordinate axes illustrated in FIG. 1. An electrical signal may be applied to the image sensor 130 and/or a component (e.g., a coil) connected to the PCB 131 through the PCB 131. According to an embodiment, the image sensor 130 may be connected to other component(s) (e.g., an image signal processor) through an FPCB 132 connected to the PCB 131.

The camera module 10 may include a carrier member to guide the lens assembly 110 to reciprocate in the direction along the optical axis (+Z-axis direction or -Z-axis direction, hereinafter simply referred to as 'D1') and/or reciprocate in a direction (X-axis direction and/or Y-axis direction, hereinafter simply referred to as 'D2, and/or D3') crossing the optical axis. The carrier member may be received in the camera housing 120 and may be disposed on the image sensor 130. While being disposed on the image sensor 130, the lens assembly 110 may be moved in the direction D1 of the optical axis O-I by the carrier member, or additionally or alternatively, may reciprocate in the direction D2 and/or D3 crossing the optical axis. Here, the carrier member may include a first carrier 140, a second carrier 150, and a third carrier 160.

The first carrier 140 may be disposed on the PCB 131. The first carrier 140 may at least partially overlap the PCB 131. According to an embodiment, the first carrier 140 may be disposed to at least partially surround the image sensor 130 on the surface of the first PCB 131 facing in the +Z-axis direction (the first direction). According to an embodiment, the first carrier 140 may be coupled with the PCB 131. According to an embodiment, the first carrier 140 may be coupled with the PCB 131 to be fixed in position. The first carrier 140 may have a first opening 141 formed in a central portion thereof and may include a first plate 142 surrounding the first opening 141. According to an embodiment, the first opening 141 may be formed at a position corresponding to the image sensor 130 and the optical opening 121 of the camera housing 120. According to an embodiment, the image sensor 130 and/or a filter may be positioned in the first opening 141. For example, as the filter, an IR cut filter for blocking infrared (IR) may be disposed, and the IR cut filter may overlap the image sensor 130 when disposed in the first opening 141.

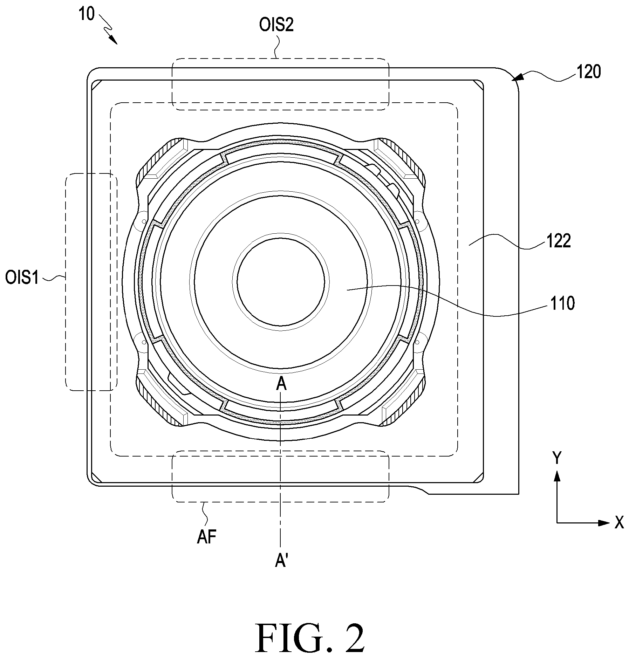

The first carrier 140 may include a first side wall 143 protruding from the first plate 142 in the +Z-axis direction (first direction). The first side wall 143 may correspond to the side member 123 of the camera housing 120 and, when the side member 123 of the camera housing 120 is formed substantially in a rectangular shape, it may include four side walls corresponding thereto. For example, the first side wall 143 may include a 1-1th side wall 143a, a 1-2th side wall 143b, a 1-3th side wall 143c, and a 1-4th side wall 143d. Coil(s) 144, 145, and 146 may be disposed on the first side wall 143. The camera module 10 according to an embodiment may include coil(s) 144, 145, and 146 disposed on the first side wall 143 to face in a direction (e.g., X-axis and/or Y-axis direction) crossing the optical axis O-I. For example, the camera module 10 may have a first coil 144 disposed on the 1-1th side wall 143a to face in a direction (Y-axis direction) crossing the optical axis O-I, a second coil 145 disposed on the 1-2th side wall 143b in a direction (X-axis direction) crossing the optical axis O-I, and a third coil 146 disposed on the 1-3th side wall 143c in a direction (Y-axis direction) crossing the optical axis O-I. In the embodiment of FIG. 1, the first coil 144 is formed as a coil forming one loop, and the second coil 145 and the third coil 146 are provided as coils forming two loops, but the disclosure is not limited thereto. Another electronic component(s) (e.g., sensors 147, 148, and 149) may be disposed inside the coil(s) 144, 145, and 146. The coil(s) 144, 145, and 146 and other electronic component(s) are described below in detail with reference to FIGS. 2 to 4.

The second carrier 150 may be disposed on the first carrier 140. According to an embodiment, the second carrier 150 may be disposed on a surface 142a of the first carrier 140 facing in the +Z-axis direction (first direction). The second carrier 150 may at least partially overlap the first carrier 140. The second carrier 150 may include a second plate 152 having a second opening 151 formed in a central portion thereof and surrounding the second opening 151. According to an embodiment, the second opening 151 may be formed at a position corresponding to the first opening 141. According to an embodiment, unlike the first carrier 140 fixedly coupled to the PCB 131, the second carrier 150 is not fixedly coupled to the first carrier 140 but may be coupled so that the position between the first carrier 140 and the counterpart is changeable. As is described below, the second carrier 150 is configured to be movable in the optical axis O-I direction D1, which is related to an auto-focus AF operation, and thus it may be referred to as an 'AF carrier'.

The second carrier 150 may include a second side wall 153 extending from the second plate 152. The second side wall 153 may face at least a portion of the first side wall 143. The second carrier 150 may reciprocate along the optical axis O-I direction D1 while the second side wall 153 faces at least a portion of the first side wall 143. As a first rail structure is provided between the second carrier 150 and the first carrier 140, the linear movement of the second carrier 150 in the optical axis O-I direction D1 may be guided and the second carrier 150 may be restricted from moving in another direction with respect to the first carrier 140. According to an embodiment, the first rail structure may be implemented by forming a rail groove(s) extending parallel to the optical axis (O-I) direction in the inner wall of the first side wall 143 of the first carrier 140, forming a rail groove(s) extending parallel to the optical axis (O-I) direction in the outer wall of the second side wall 153 of the second carrier 150, and arranging a plurality of first guide balls 180 between the rail groove(s) of the first side wall 143 and the rail groove(s) of the second side wall 153. Although FIG. 1 illustrates that the first guide balls 180 are disposed in two different areas, the disclosure is not limited thereto, and the first guide balls may be disposed in one area or three or more different areas. The rail groove(s) formed in the inner wall of the first side wall 143 of the first carrier 140 and the outer wall of the second side wall 153 of the second carrier 150 are rails for guiding the first guide ball 180, and may be formed in, e.g., a V-groove shape.

According to an embodiment, the camera module 10 may include a first magnet 154 disposed to face in the direction (Y-axis direction) crossing the optical axis O-I at a position corresponding to the 1-1th side wall 143a of the first carrier 140 of the second side wall 153 of the second carrier 150. The first magnet 154 and the first coil 144 may constitute the first driver M1. According to an embodiment, the first driver M1 may drive the lens assembly 110 in a ball bearing manner using the first guide ball 180. The first driver M1 is described in detail with reference to FIGS. 2 to 4.

The third carrier 160 may be disposed on the second carrier 150. According to an embodiment, the third carrier 160 may be disposed on a surface 152a of the second carrier 150 facing in the +Z-axis direction (first direction). The third carrier 160 may at least partially overlap the second carrier 150. A third opening 161 may be formed in the central portion of the third carrier 160. The third opening 161 may be formed at a position corresponding to the second opening 151. According to an embodiment, the third carrier 160 may not be fixedly coupled to the second carrier 150, but may be coupled so that the relative positions thereof may be changed. The third carrier 160 may linearly reciprocate in a direction D2 and/or D3 crossing the optical axis while being disposed on the second carrier 150. Since the movement in the direction D2 and/or D3 crossing the optical axis is related to an optical image stabilization (OIS) operation, the third carrier 160 may be referred to as an 'OIS carrier'.

The third carrier 160 may include a 3-1th carrier 160a and a 3-2th carrier 160b capable of linearly reciprocating in two different directions D2 or D3, respectively, crossing the optical axis. For example, if the 3-1th carrier 160a linearly reciprocates in the direction D2, the 3-2th carrier 160b may linearly reciprocate in the direction D3, whereas if the 3-1th carrier 160a linearly reciprocates in the direction D3, the 3-2th carrier 160b may linearly reciprocate in the direction D2. In the following description, an embodiment where the 3-1th carrier 160a linearly reciprocates in the D2 direction and the 3-2th carrier 160b linearly reciprocates in the D3 direction is mainly described.

As the second rail structure is provided between the 3-1th carrier 160a and the second carrier 150, a linear movement of the 3-1th carrier 160a in the direction D2 crossing the optical axis O-I may be guided and the third carrier 160 may be restricted from moving in another direction with respect to the second carrier 150. According to an embodiment, the second rail structure may be implemented by forming the rail groove(s) extending in the direction D2 crossing the optical axis O-I in the bottom surface (the surface facing in the -Z-axis direction) of the 3-1th carrier 160a, forming the rail groove(s) 152b extending in the direction D2 crossing the optical axis O-I in the surface 152a facing in the +Z-axis direction of the second carrier 150, and arranging a plurality of second guide balls 190 between the rail groove(s) in the bottom surface of the 3-1th carrier 160a and the rail groove(s) 152b of the second plate 152. Although FIG. 1 illustrates that the second guide balls 190 are disposed in four different areas, the disclosure is not limited thereto, and the second guide balls may be disposed in three or less different areas, or five or more different areas. The rail groove(s) of the bottom surface of the 3-1th carrier 160a and the rail groove(s) 152b of the second plate 152 are rails for guiding the second guide ball 190, and may be, e.g., formed in a V-groove shape.

As the third rail structure is provided between the 3-2th carrier 160b and the 3-1th carrier 160a, a linear movement of the 3-2th carrier 160b in the direction D3 crossing the optical axis O-I may be guided, and movement of the 3-2th carrier 160b in a different direction with respect to the 3-1th carrier 160a may be restricted. The third rail structure may be orthogonal to the second rail structure. According to an embodiment, the third rail structure may be implemented by forming the rail groove(s) extending in the direction D3 crossing the optical axis O-I in the bottom surface (the surface facing in the -Z-axis direction) of the 3-2th carrier 160b, forming the rail groove(s) extending in the direction D3 crossing the optical axis O-I in the upper surface (the surface facing in the +Z-axis direction) of the 3-1th carrier 160a, and arranging a plurality of second guide balls 190 between the rail groove(s) in the bottom surface of the 3-2th carrier 160b and the rail groove(s) in the upper surface of the 3-1th carrier 160a. The rail groove(s) in the bottom surface of the 3-2th carrier 160b and the rail groove(s) of the 3-1th carrier 160a are also rails for guiding the second guide ball 190 and may be formed in, e.g., a V-groove shape.

Magnet(s) 165 and 166 may be disposed around the third carrier 160. According to an embodiment, the camera module 10 may include a second magnet 165 disposed to face in the direction (X-axis direction) crossing the optical axis O-I at a position corresponding to the 1-2th side wall 143b of the first carrier 140, around the third carrier 160, and a third magnet 166 disposed to face in a direction (Y-axis direction) crossing the optical axis O-I at a position corresponding to the 1-3th side wall 143c of the first carrier 140, around the third carrier 160. According to an embodiment, the second magnet 165, together with the second coil 145, may constitute a second driver M2. The third magnet 166, together with the third coil 146, may constitute the third driver M3. According to an embodiment, the second driver M2 and the third driver M3 may drive the lens assembly 110 in a ball bearing manner using the second guide ball 190. The second driver M2 and the third driver M3 are described below in detail with reference to FIGS. 2 to 4.

The frame 170 may be disposed on the third carrier 160. According to an embodiment, the frame 170 may be disposed on an upper surface (a surface facing in the +Z-axis direction) of the third carrier 160. The frame 170 may at least partially overlap the third carrier 160. According to an embodiment, the frame 170 may be fixedly coupled to the second carrier 150. According to an embodiment, the frame 170 is disposed inside the camera housing, and itself may at least partially surround the first driver (or focus adjustment driver) M1 and/or the second and third drivers M2 and M3 (or image stabilization driver). According to an embodiment, the frame 170 may be referred to as an 'AF carrier cover' in terms of being fixedly coupled to the second carrier 150 and disposed to surround the first driver M1. Additionally or alternatively, the frame 170 may be referred to as an 'OIS carrier cover' in terms of being disposed on the third carrier 160 and also surrounding the second and third drivers M2 and M3. According to an embodiment, the frame 170 may be provided to cover the carrier assembly after forming the carrier assembly where the second carrier 150 and the third carrier 160 and internal components (e.g., coils, magnets, guide balls) are assembled. The frame 170 may include a fourth plate 172 having a fourth opening 171 formed in the central portion and surrounding the fourth opening 171. The frame 170 may include a fourth side wall 173 protruding from the fourth plate 172 in the -Z-axis direction (the second direction). According to an embodiment, the fourth side wall 173 may be formed to substantially surround the carrier assembly. Alternatively, the fourth side wall 173 may have a shape where a frame piece extending from the fourth plate 172 is folded to protrude in the -Z-axis direction (second direction) as illustrated in FIG. 1. According to an embodiment, the frame 170 may be formed of a metal material and/or a non-metal material (e.g., polymer), and may be formed of a rigid material to protect the carrier assembly from external impact.

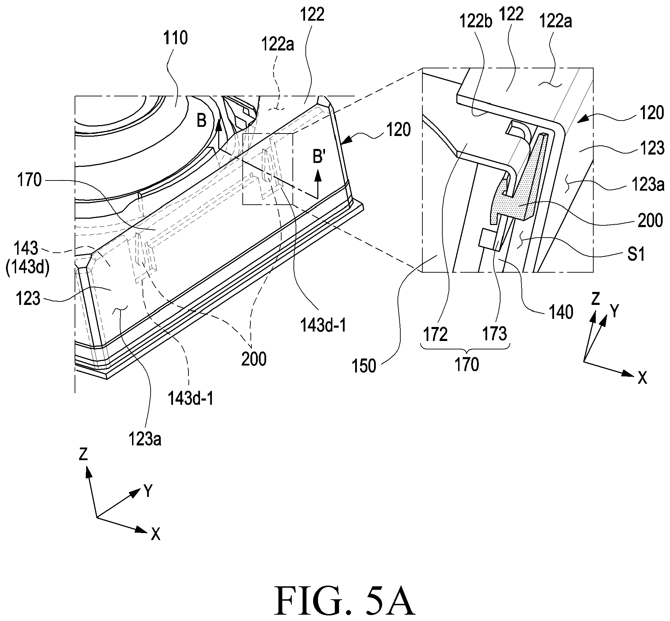

The camera module 10 may include a plurality of side wall(s) 173. At least some of the plurality of side wall(s) 173 may have an opening-shaped fastening structure as illustrated in the drawings, which may be coupled to a hook-shaped fastening structure (not shown) formed on the second side wall 153 of the second carrier 150. However, the disclosure is not limited thereto, and a hook-shaped fastening structure may be provided on the plurality of side walls(s) 173, and an opening-shaped fastening structure may be provided on the second side wall 153 of the second carrier 150 corresponding thereto. According to an embodiment of the disclosure, a damper 200 may be provided in at least one of a plurality of side wall(s) 173. One end portion portion of the damper 200 may be fixed on the second surface 173a of the plurality of side walls 173 of the frame 170, and the other end thereof may extend toward the camera housing 120. The camera module and the electronic device including the same of the disclosure may distribute the impact applied to the camera module 10 and/or reduce noise using the damper 200 provided on the second surface 173a of the frame 170. Hereinafter, the damper 200 is described in more detail with reference to FIGS. 5A to 9B.

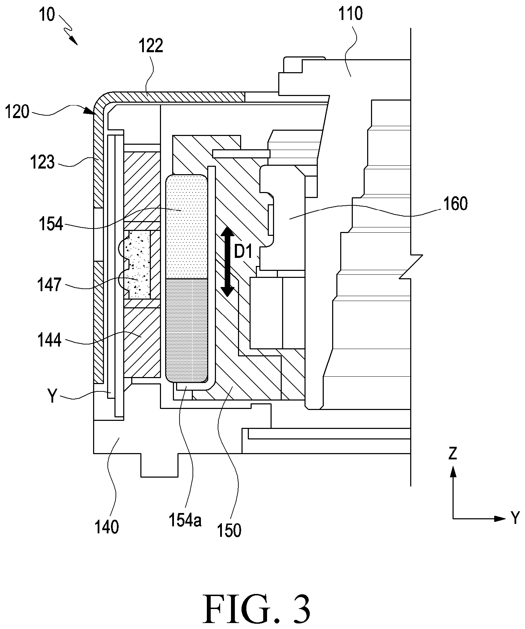

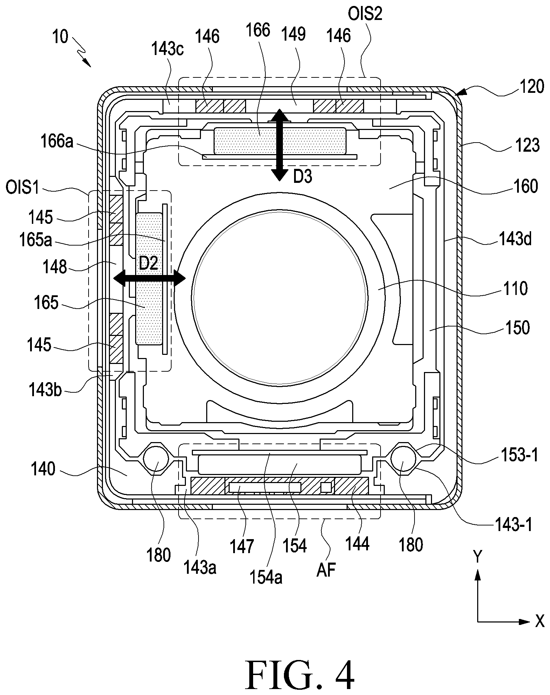

FIG. 2 is a front view illustrating a camera module according to an embodiment of the disclosure. FIG. 3 is a cross-sectional view of the camera module of FIG. 2, taken along direction A-A'. FIG. 4 is a cross-sectional view of the camera module of FIG. 2, taken along a direction parallel to the XY plane.

Referring to FIGS. 2 to 4, behavior during focus adjustment and behavior during image stabilization by the driving member M1, M2, and M3 of the camera module 10 according to an embodiment of the disclosure may be described.

Referring to FIGS. 1 to 4, the driving member M1, M2, and M3 may include at least one coil and at least one magnet disposed to partially face the at least one coil. In this case, the at least one magnet may be disposed to face at least one coil in a state of facing in the direction (e.g., X-axis direction and/or Y-axis direction) crossing the optical axis or be disposed to face at least one coil in a state of facing in the optical axis direction (e.g., Z-axis direction). A plurality of driving member M1, M2, and M3 may be provided. According to an embodiment, the driving member M1, M2, and M3 may include a first driver M1, a second driver M2, and a third driver M3. In this case, the first driver M1 may be a focus adjustment driver (AF) for automatically adjusting the focus of the camera module 10, and the second driver M2 and the third driver M3 may be image stabilization drivers (OIS drivers) that are drivers for optical image stabilization (OIS) of the camera module 10. The driving members M1, M2, and M3 may allow the lens assembly 110 to move independently in three different directions (e.g., three axial directions of the spatial coordinate system of FIG. 1). According to an embodiment, various embodiments of the disclosure may be applied to the lens shift-type camera module 10 as described above. However, the disclosure is not necessarily limited thereto, and when the focus adjustment driver (AF driver) includes a voice coil motor (VCM), it may be applied to the camera module 10 of a type (e.g., image sensor shift) other than the lens shift type.

The first driver M1 may include a first coil 144 disposed in the first carrier 140, and a first magnet 154 disposed at a position corresponding to the first coil 144 on the second side wall 153 of the second carrier 150. According to an embodiment, the camera module 10 may further include a first supporting member 154a connected to the second carrier 150 and supporting the first magnet 154, and the first magnet 154 may face the first coil 144 in a direction (Y-axis direction) crossing the optical axis O-I while being disposed on the first supporting member 154a. The first carrier 140 may be fixed and disposed on the PCB 131. Accordingly, the position of the first coil 144 may also be fixed. If a current is applied to the first coil 144 whose position is fixed, the first magnet 154 and/or the second carrier 150 where the first magnet 154 is disposed may be driven in the optical axis O-I direction D1 by the first magnet 154 and the magnetic field applied therearound. As described above in FIG. 1, rail grooves(s) may be formed in the respective side walls (the first side wall 143 and the second side wall 153) of the first carrier 140 and the second carrier 150. For example, rail groove(s) 143-1 may be formed in the inner wall of the first side wall 143, and rail groove(s) 153-1 may be formed in the outer wall of the second side wall 153. Further, a first guide ball 180 may be disposed between the rail groove(s) 143-1 formed in the inner wall of the first side wall 143 and the rail groove(s) 153-1 formed in the outer wall of the second side wall 153. A predetermined gap may be formed between the second carrier 150 and the first carrier 140 so that the second carrier 150 does not interfere with the first carrier 140. However, since the second side wall 153 of the second carrier 150 is surrounded by the first side wall 143 of the first carrier 140, the movement of the second carrier 150 in at least some directions may be limited by the first carrier 140. If a current is applied to the first coil 144, the second carrier 150 may move in the direction D1 of the optical axis O-I guided by the rail groove(s) 143-1 and 153-1 and the first guide ball 180, but may be restricted from moving in other directions. If the direction of the current applied to the first coil 144 is changed, the driving direction of the first magnet 154 and the second carrier 150 where the first magnet 154 is disposed may be changed. The lens assembly 110 may move depending on the behavior of the second carrier 150, and accordingly, a focus adjustment (AF) operation may be implemented.

The second driver M2 may include a second coil 145 disposed in the first carrier 140, and a second magnet 165 disposed at a position corresponding to the second coil 145 around the third carrier 160. According to an embodiment, the camera module 10 may further include a second supporting member 165a connected to the 3-1th carrier 160a and supporting the second magnet 165, and the second magnet 165 may face the second coil 145 in a direction (X-axis direction) crossing the optical axis O-I while being disposed on the second supporting member 165a. The 3-1th carrier 160a may move together with the second magnet 165 through the second supporting member 165a. If a current is applied to the second coil 145 whose position is fixed, the second magnet 165 and the 3-1th carrier 160a may be driven in a direction D2 crossing the optical axis O-I by the second magnet 165 and magnetic field applied therearound. As described above with reference to FIG. 1, rail groove(s) may be formed between the second carrier 150 and the 3-1th carrier 160a. For example, rail groove(s) 152b may be formed in the upper surface (the surface facing in the +Z axis) 152a of the second plate 152 of the second carrier 150, and rail groove(s) corresponding thereto may be formed in the bottom surface of the 3-1th carrier 160a. Further, a second guide ball 190 may be arranged between the rail groove(s) 152b formed in the upper surface 152a of the second carrier 150 and the rail groove(s) formed in the bottom surface of the 3-1th carrier 160a. According to an embodiment, a predetermined gap may be formed between the 3-1th carrier 160a and the second carrier 150 so that the 3-1th carrier 160a does not interfere with the second carrier 150. However, since the 3-1th carrier 160a is surrounded by the second side wall 153 of the second carrier 150, the movement of the 3-1th carrier 160a may be at least partially limited. If a current is applied to the second coil 145, the 3-1th carrier 160a may move in the direction D2 crossing the optical axis O-I guided by the second guide ball 190 and the rail groove(s) between the 3-1th carrier 160a and the second carrier 150, but its movement in other directions may be limited. If the direction of the current applied to the second coil 145 is changed, the driving direction of the second magnet 165 and the 3-1th carrier 160a may be changed. The 3-2th carrier 160b may move, depending on the behavior of the 3-1th carrier 160a. The lens assembly 110 may also move depending on the behavior of the 3-1th carrier 160a, and accordingly, the first image stabilization OIS1 operation may be implemented.

The third driver M3 may include a third coil 146 disposed in the first carrier 140, and a third magnet 166 disposed at a position corresponding to the third coil 146 around the third carrier 160. According to an embodiment, the camera module 10 may further include a third supporting member 166a connected to the third carrier 160 and supporting the third magnet 166, and the third magnet 166 may face the third coil 146 in a direction (X-axis direction) crossing the optical axis O-I while being disposed on the third supporting member 166a. If a current is applied to the third coil 146 whose position is fixed, the third magnet 166 and/or the third carrier 160 where the third magnet 166 is disposed may be driven in the direction D3 crossing the optical axis O-I by the third magnet 166 and the magnetic field applied therearound. As described above with reference to FIG. 1, rail groove(s) may be formed between the 3-2th carrier 160b and the 3-1th carrier 160a. For example, a rail groove(s) may be formed in the bottom surface of the 3-2th carrier 160b, and a rail groove(s) corresponding thereto may be formed in the upper surface of the 3-1th carrier 160a. Further, a second guide ball 190 may be arranged between the rail groove(s) formed in the bottom surface of the 3-2th carrier 160b and the rail groove(s) formed in the upper surface of the 3-1th carrier 160a. According to an embodiment, a predetermined gap may be formed between the 3-2th carrier 160b and the 3-1th carrier 160a so that the 3-2th carrier 160b does not interfere with the 3-1th carrier 160a. Further, a predetermined gap may be formed between the 3-2th carrier 160b and the frame so that the 3-2th carrier 160b does not interfere with the frame 170. Since the 3-2th carrier 160b is surrounded by the 3-1th carrier 160a and the frame 170, movement of the 3-2th carrier 160b may be at least partially limited. If a current is applied to the third coil 146, the 3-2th carrier 160b may move in the direction D3 crossing the optical axis O-I guided by the second guide ball 190 and the rail groove(s) between the 3-2th carrier 160b and the 3-1th carrier 160a, but its movement in other directions may be limited. If the direction of the current applied to the third coil 146 is changed, the driving direction of the third magnet 166 and the third carrier 160 where the second magnet 165 is disposed may be changed. The lens assembly 110 may also move depending on the behavior of the third carrier 160, and accordingly, the second image stabilization OIS2 operation may be implemented.

In the embodiments of FIGS. 1 to 4, an embodiment in which the first driver M1 adopts a Lorenz-type VCM to which Faraday's left-hand law is applied, and the second driver M2 and the third driver M3 adopt a solenoid-type VCM to which Ampere's right-hand law is applied is disclosed. However, it is not necessarily limited thereto, and it should be noted that an embodiment in which a solenoid-type VCM is applied to the first driver M1 and a Lorentz-type VCM is applied to the second driver M2 and the third driver M3 may also be included in the embodiments of the disclosure.

According to an embodiment, the electronic device (e.g., the electronic device 1001 of FIG. 10) or the processor (e.g., the processor 1020 of FIG. 10) may move the lens assembly 110 of the camera module 10 in the optical axis O-I direction D1 based on phase difference information or contrast information about an image or video. In this case, the first driver M1 may perform an operation of moving the lens assembly 110 in the optical axis O-I direction D1.

According to an embodiment, the electronic device (e.g., the electronic device 1001 of FIG. 10) or the sensor module (e.g., a gyro sensor and/or an acceleration sensor as one of the sensor modules 1076 of FIG. 10) may be configured to detect vibration applied to the housing or camera module 10 of the electronic device (e.g., the electronic device 1001 of FIG. 10). The electronic device (e.g., 1001 of FIG. 10) or the processor (e.g., the processor 1020 of FIG. 10) may move the lens assembly 110 in at least one of directions D2 or D3 crossing the optical axis O-I based on the vibration detected through the sensor module 1076. According to an embodiment, the electronic device or processor may identify whether the vibration detected by the sensor module 1076 is the user's handshake and, when it is identified as the user's handshake, may move the lens assembly 110. Identifying vibration in a general use environment and identifying hand shake in photographing may be based on data on the acceleration or direction of vibration and/or vibration force, and such data may be stored in the electronic device and/or memory (e.g., the memory 1030 of FIG. 10). By moving the lens assembly 110 in the direction crossing the optical axis, it is possible to compensate for the vibration applied to the housing or camera module 10 of the electronic device (e.g., the electronic device 1001 of FIG. 10) by an external force and increase the quality of the captured image or video.

According to an embodiment, the camera module 10 is an example of the sensor module (e.g., the sensor module 1076 of FIG. 10), and may further include a sensor 147 for detecting the displacement of the first magnet 154 during the focus adjustment AF operation. According to an embodiment, the sensor 147 may be disposed in a hollow surrounded by the first coil 144. Additionally, the camera module 10 may further include a sensor(s) 148 and 149 for detecting displacement of the second magnet 165 and/or the third magnet 166 during the image stabilization operation as another example of the sensor module (e.g., the sensor module 1076 of FIG.

10). According to an embodiment, the sensor(s) 148 and 149 may be disposed in the hollows surrounded by the second coil 145 and the third coil 146, respectively.

According to an embodiment, the camera module 10 may include at least one yoke. At least one yoke may align, e.g., the electric field and/or the magnetic field generated from the driving member M1, M2, and M3 within a designated area or space. For example, at least one yoke may contribute to reducing the power applied to the coil(s) 144, 145, and 146 or downsizing the driving members M1, M2, and M3 by allowing the electric and/or magnetic fields generated from the driving members M1, M2, and M3 to act within the designated area or space. According to an embodiment, the camera module 10 may be easily mounted in a compact electronic device by reducing power consumption or downsizing the driving member M1, M2, and M3, and may increase power efficiency in an auto-focus operation or an image stabilization operation. Referring to FIG. 3, the first driver M1 may include a first yoke Y, and the first yoke Y may be positioned opposite to the first magnet 154 with respect to the position of the first coil 144. Further, the first yoke Y may serve to increase the strength of the magnetic force acting between the first coil 144 and the first magnet 154. According to an embodiment, although not separately illustrated in the drawings, similar to the arrangement and operation principle of the first yoke Y, the second driver M2 may include a second yoke, and/or the third driver M3 may include a third yoke.

Referring to FIG. 3, when the first magnet 154 linearly reciprocates in the optical axis O-I direction, a suction force by the first yoke Y may be provided, and a holding force of maintaining the posture with respect to the neutral zone by the magnetic field of the first magnet 154 may be provided. As a result, when the electronic device (e.g., the electronic device 1001 of FIG. 10) or the camera module 10 is slightly shaken, shaking noise due to the shake may be partially reduced, but when the electronic device is severely shaken while the user is on the move or is using the electronic device (e.g., the electronic device 1001 of FIG. 10), significant shaking noise may occur.

According to an embodiment, a damper having a flat plate structure may be formed on a first surface 172a of the fourth plate 172 of the frame 170, but the damper having the flat plate structure is a structure that is not enough to absorb and/or distribute an impact, and may not sufficiently reduce noise.

In the disclosure, as illustrated in FIG. 1, there may be provided a camera module 10 capable of significantly reducing noise and facilitating absorption or distribution of impact by including a damper 200 having one end portion fixed to the frame and the other end extending toward the camera housing and, when contacting the camera housing, bent in one direction.

According to an embodiment, the damper 200 is positioned where the driver (e.g., the first driver M1) for focus adjustment (AF) and the drivers (e.g., the second driver M2 and the third driver M3) for image stabilization (OIS) are not disposed, not to affect the focus adjustment (AF) operation and image stabilization (OIS) operation. Referring to FIGS. 1 to 4, the driver (e.g., the first driver M1) for the focus adjustment (AF) may be disposed at a position corresponding to the 1-1th side wall 143a, and the drivers (e.g., the second driver M2 and the third driver M3) for the image stabilization (OIS) may be disposed at positions corresponding to the 1-2th side wall 143b and the 1-3th side wall 143c. Accordingly, the damper 200 may be disposed at a position corresponding to the 1-4th side wall 144c except for the 1-1th side wall 143a, the 1-2th side wall 143b, and the 1-3th side wall 143c of the first carrier 140.

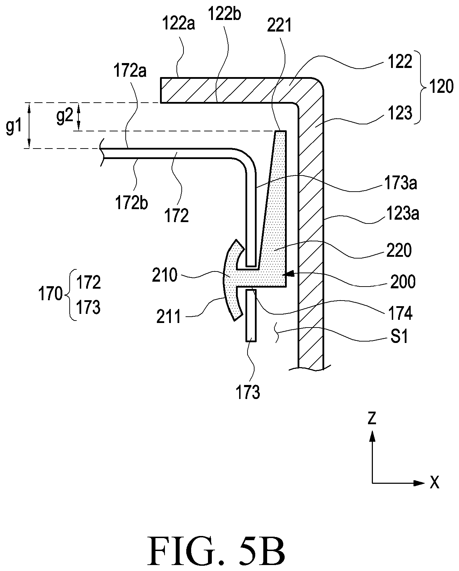

FIG. 5A is a view illustrating a state in which a damper is disposed on a second surface of a frame of a camera module according to an embodiment of the disclosure. FIG. 5B may illustrate a placement relationship between a camera housing and a frame in a cross section of the camera module of FIG. 5A, taken along direction B-B'.

Referring to FIGS. 5A and 5B, the camera module 10 of the disclosure may include a damper 200 disposed on the frame 170.

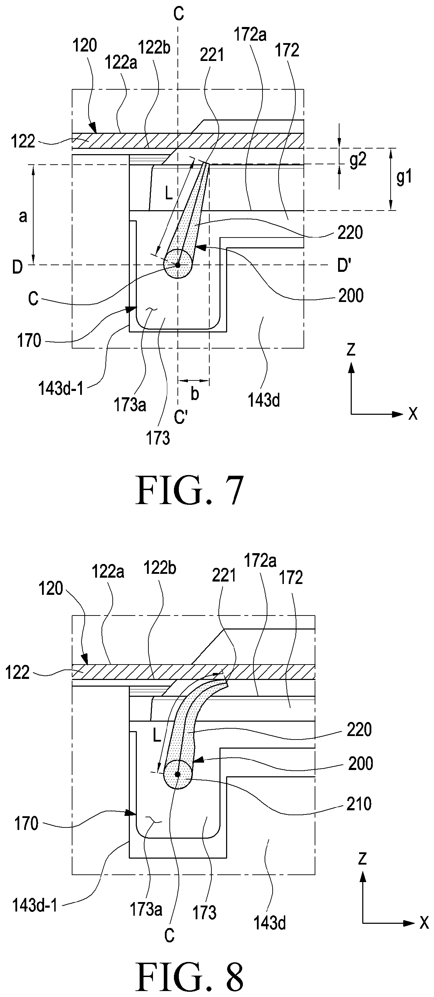

When the electronic device (e.g., the electronic device 1001 of FIG. 10) and/or the camera module 10 are shaken, the frame 170 may move closer to or away from the camera housing 120 along the first direction (+Z direction). While the electronic device (e.g., the electronic device 1001 of FIG. 10) and/or the camera module 10 are not shaken, the frame 170 and the camera housing 120 may be spaced apart from each other by the first gap g1. Here, the state in which the electronic device (e.g., the electronic device 1001 of FIG. 10) and/or the camera module 10 are not shaken may mean an initial state in which the damper 200, which is described below, is not crushed or deformed. Further, the state in which the electronic device (e.g., electronic device 1001 of FIG. 10) and/or the camera module 10 is not shaken may include a state in which power is not applied to the electronic device (e.g., electronic device 1001 of FIG. 10) and/or the camera module 10, i.e., a non-powered state. The damper 200 of the disclosure may be formed to be spaced apart from the camera housing 120 by the second gap g2 in a state in which the electronic device (e.g., the electronic device 1001 of FIG. 10) and/or the camera module 10 is not shaken. When the electronic device is shaken so that the frame 170 approaches the camera housing 120, the damper 200 fixed to the frame 170 may also move in a direction of approaching the camera housing 120, and when the frame 170 further approaches the camera housing 120, the damper 200 may contact the rear surface 122b of the camera housing 120. The damper 200 in contact with the rear surface 122b of the camera housing 120 may be pressed by the camera housing 120 and bent in one direction as illustrated in FIG. 8 to be described below.

The frame 170 may include a first surface 172a

facing the cover plate 122 of the camera housing 120 and a second surface 173a facing the side member 123 of the camera housing 120. Further, the damper 200 may be disposed on the second surface 173a of the frame 170. For example, when the damper 200 is disposed on the first surface 172a of the frame 170, it may be difficult to secure a height (a height in the Z-axis direction) of the damper 200 in the optical axis O-I direction. Therefore, when the damper 200 is disposed on the first surface 172a of the frame 170, it may be difficult to absorb and/or distribute the impact generated when the frame 170 and the camera housing 120 collide through the damper 200. Further, when the damper 200 is disposed on the first surface 172a of the frame 170, the noise generated when the frame 170 and the camera housing 120 collide may be large. In the disclosure, as the damper 200 is disposed on the second surface 173a of the frame 170, it may be easy to secure a height of the damper 200 in the optical axis (O-I) direction, and accordingly, absorb and/or disperse the impact generated when the frame 170 and the camera housing 120 collide through the damper 200 while reducing noise.

The damper 200 may include at least a portion 210 fixed to the frame 170 and a portion 220 extending inclined with respect to the optical axis, and the extending portion 220 may be disposed in the space S1 between the frame 170 and the side member 123. According to an embodiment, the damper 200 may be disposed in the space S1 between the fourth side wall 173 of the frame 170 and the side member 123 of the camera housing 120. Since a predetermined gap is formed between the fourth side wall 173 and the side member 123 so as not to interfere with the camera housing 120, the gap may be used as a space S1 where the damper 200 may be disposed. According to an embodiment, the space S1 between the fourth side wall 173 of the frame 170 and the side member 123 of the camera housing 120 may correspond to a thickness of the first side wall 143 of the first carrier 140. According to an embodiment, the 1-4th side wall 143d of the first carrier 140 may include a recess 143d-1 formed so as not to interfere with the damper 200 while the damper 200 reciprocates in the optical axis O-I direction D1 during the focus adjustment (AF) operation.

The damper 200 may include a first portion 210 and a second portion 220 extending from the first portion 210 to be a single body. The first portion 210 may be a portion of the damper 200 whose position and/or shape is fixed to the second surface 173a of the frame 170, and the second portion 220 may be a portion whose position and/or shape is variable. According to an embodiment, the first portion 210 and the frame 170 may be formed through a double injection-molding process. According to another embodiment, the first portion 210 may be formed in a hook shape and may be formed by being press-fitted into the opening 174 formed in the fourth side wall 173 of the frame 170.

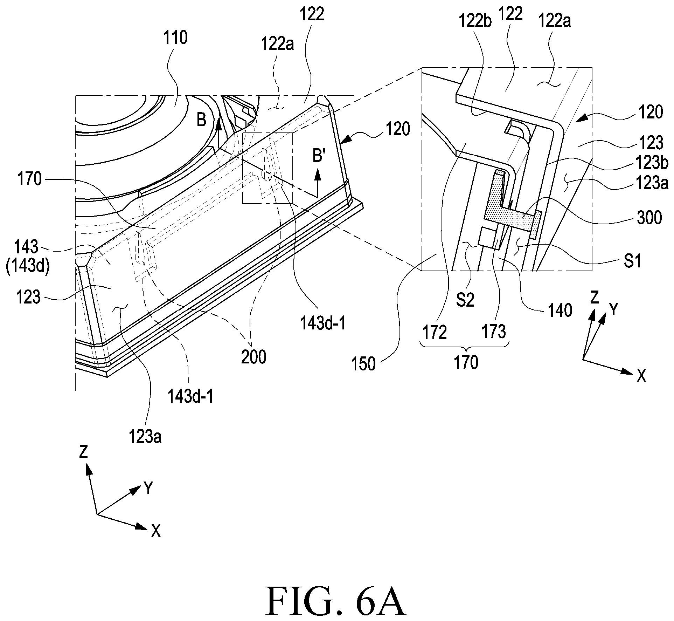

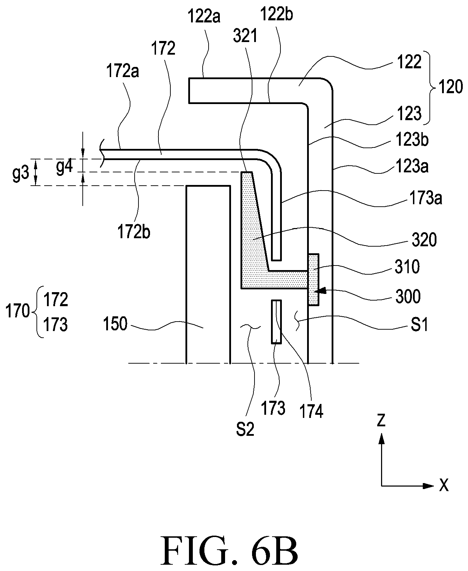

FIG. 6A is a view illustrating a state in which a damper is disposed on an inner surface of a camera housing according to an embodiment of the disclosure. FIG. 6B may illustrate a placement relationship between a camera housing and a frame in a cross section of the camera module of FIG. 6A, taken along direction B-B'.

Referring to FIGS. 6A and 6B, a camera module 10 of the disclosure may include a damper 300 disposed on the inner surface 123b of the camera housing 120. According to an embodiment, the damper 300 may be formed on the inner surface 123b of the camera housing 120 through an injection-molding process.

In a state in which the electronic device (e.g., the electronic device 1001 of FIG. 10) and/or the camera module 10 is not shaken (initial state), the frame 170 and the third carrier 160 may be formed to be spaced apart from each other by a third gap g3. The damper 300 of the disclosure may be formed so that the end portion 321 is spaced apart from the frame 170 by a fourth gap g2 in a state in which the electronic device (e.g., the electronic device 1001 of FIG. 10) and/or the camera module 10 is not shaken. When the electronic device is shaken and the frame 170 approaches the second carrier 150, the damper 300 fixed to the camera housing 120 may also approach the frame 170, and when the frame 170 further approaches the damper 300, the damper 300 may contact the rear surface 172b of the frame 170. The damper 300 in contact with the rear surface 172b of the frame 170 may be pressed by the frame 170 and bent in one direction as illustrated in FIG. 8 to be described below.

The damper 300 may at least partially include a portion 310 fixed to the camera housing and a portion 320 extending inclined from the optical axis. The extending portion 320 may be disposed in a space S2 between the frame 170 and the second carrier 150. According to an embodiment, the damper 300 may be disposed in the space S2 between the fourth side wall 173 of the frame 170 and the second carrier 150. The damper 300 may include a first portion 310 and a second portion 320 extending from the first portion 310 to be a single body. The first portion 310 may be a portion of the damper 300 whose position and/or shape is fixed to the inner surface 123b of the camera housing 120, and the second portion 320 may be a portion whose position and/or shape is variable. According to an embodiment, the first portion 310 and the camera housing 120 may be formed through a double injection-molding process. According to an embodiment, the damper 300 may be guided by an opening 174 formed in the fourth side wall 173 of the frame 170.

According to various embodiments, the category of the disclosure is not limited to the embodiments illustrated in FIGS. 5A and 5B, and/or FIGS. 6A and 6B. According to an embodiment, the embodiments illustrated in FIGS. 5A and 5B may be combined with the embodiments illustrated in FIGS. 6A and 6B. According to an embodiment of the disclosure, the electronic device (e.g., the electronic device 1001 of FIG. 10) or the camera module 10 may include both the damper 200 illustrated in FIGS. 5A and 5B and the damper 300 illustrated in FIGS.

6A and 6B. For example, a plurality of dampers may be provided at a position corresponding to one of the side walls of the camera module 10 (e.g., the 1-4th side wall 143d). Referring to FIGS. 5A and 6A, the camera module 10 may include two dampers disposed symmetrically to the left and right around the lens barrel 110. In this case, the damper 200 according to the embodiment illustrated in FIGS. 5A and 5B may be applied as one damper, and the damper 300 according to the embodiment illustrated in FIGS. 6A and 6B may be applied as another damper.

Hereinafter, the first portion 210 and the second portion 220 of the damper 200 are described in more detail with reference to FIGS. 7 and 8. The description of the damper 200 of FIGS. 7 and 8 may be applied to the damper 300 described above in FIGS. 6A and 6B.

FIG. 7 is a front view illustrating a damper 200 according to an embodiment of the disclosure. FIG. 8 is a view illustrating a state in which the damper 200 of FIG. 7 is bent when contacting a cover plate 122 of a camera housing 120.

FIGS. 7 and 8 illustrate a state in which the damper 200 is disposed at a position corresponding to the 1-4th side wall 144c except for the 1-1th side wall 143a, the 1-2th side wall 143b, and the 1-3th side wall 143c of the first carrier 140.

Referring to FIGS. 5 to 8 together, the first portion 210 of the damper 200 may include a first end portion 211, and the second portion 220 may include a second end portion 221. According to an embodiment, the first end portion 211 may be formed as a fixed end, and the second end portion 221 may be formed as a free end. According to an embodiment, the first portion 210 of the damper 200 may be fixed to the frame 170, and the second portion 220 may have a shape extending toward the camera housing 120 (more specifically, the cover plate 122 of the camera housing 120). When the second portion 220 contacts the camera housing 120, it may be bent in one direction as illustrated in FIG. 8. According to an embodiment, the damper 200 may primarily absorb and/or disperse the impact when it contacts the camera housing 120, and as the damper 200 moves slightly further toward the camera housing 120, the second portion 220 may be bent in one direction to secondarily absorb and/or disperse the impact. According to an embodiment, the damper 200 is bent in one direction when contacting the camera housing 120, and if the contact with the camera housing 120 is released, the shape may be restored, and its position may also be restored to face in the direction inclined from the optical axis O-I.

The damper 200 may be flexibly changed in shape. According to an embodiment, the damper 200 may include a material having elasticity such as rubber and urethane. Therefore, even if a portion of the damper 200 (e.g., the second portion 220) is pressed and deformed, it may be restored to its original shape when the pressing is released.

Referring to FIG. 8, a direction where the damper 200 is bent may be a direction parallel to the X-axis when viewed from the second end portion 221 of the second portion 220. Alternatively, when looking at the second end 221 of the second portion 220 from the point C, the direction in which the damper 200 is bent may correspond to the clockwise direction. The direction in which the damper 200 is bent may be different according to embodiments. The damper 200 may face in any direction as long as it is configured to bend only in one direction when pressed by the rear surface 122b of the cover plate 122 of the camera housing 120.

Referring back to FIG. 7, the first portion 210 may be fixed to the frame 170 at the point C, and in this case, the point C may be the position of the center of the first end portion 211. The second portion 220 may be elongated from the first portion 210 so that the second end portion 221 faces the camera housing 120. In this case, the second portion 220 may not extend in parallel with the optical axis O-I, but may extend in a direction inclined from the optical axis O-I. According to an embodiment, the second end portion 221 of the second portion 220 may be formed at a position extending along an imaginary line drawn from the point C of the first portion 210 to be inclined at a predetermined angle from the optical axis O-I.

According to an embodiment, the second portion 220 may be described in more detail with reference to the imaginary line A-A' drawn parallel to the optical axis O-I with respect to the point C and the imaginary line B-B' drawn perpendicular thereto. According to an embodiment, the second portion 220 may have a length 'L' of the portion extending along the imaginary line drawn from the point C toward the second end portion 221 of the damper 200. When the lengths of the portions corresponding to the length L on the imaginary line A-A' and the imaginary line B-B' are 'a' and 'b', respectively, the length 'L' of the second portion 220 may be "$\sqrt{a^2+b^2}$". For example, when the gap between the damper 200 and the camera housing 120 is set to be spaced apart by the second gap g2, and it is disposed on the imaginary line A-A' drawn parallel to the optical axis O-I, the damper 200 may have a length of 'a', whereas, if it is disposed in a direction inclined from the optical axis O-I, the damper 200 may have a length of '$\sqrt{a^2+b^2}$' larger than the length 'a'. When the damper 200 is disposed in the direction inclined from the optical axis O-I, the length in which the damper 200 (more specifically, the second portion 220 of the damper 200) may be bent when pressed by the rear surface 122b of the cover plate 122 of the camera housing 120 may be increased as compared with when the damper 200 is disposed on the imaginary line A-A' drawn parallel to the optical axis O-I.

As in the embodiment of FIGS. 7 and 8, as the damper 200 is disposed to face in the direction inclined from the optical axis O-I, the damper 200 may be bent, increasing the effect of secondarily absorbing and/or dispersing impact as the damper 200 is bent.

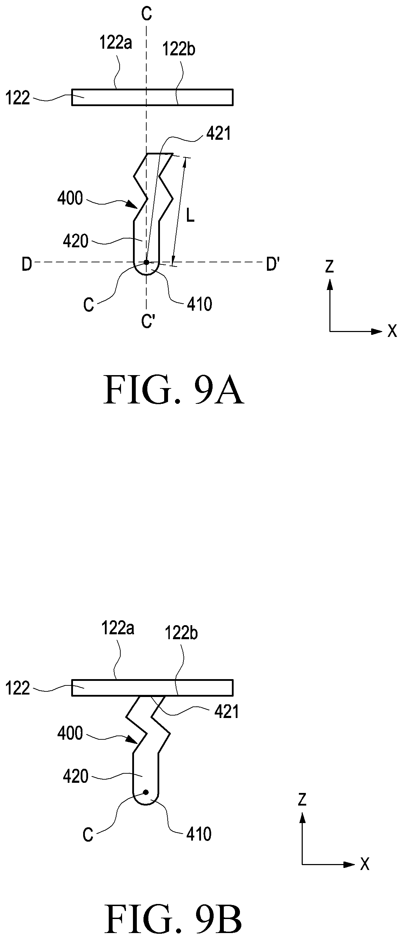

FIG. 9A is a front view illustrating a damper according to an embodiment of the disclosure. FIG. 9B is a view illustrating a state in which the damper of FIG. 9A is bent when contacting a cover plate of a camera housing.

The shape of the damper is not limited to a certain specific shape. For example, as illustrated in FIG. 7, at least a portion of the cross-sectional shape of the damper 200 may have a wedge shape before deformation, but other shapes may also be applied.

For example, as referred to in FIGS. 9A and 9B, a damper 400 having a cross section at least partially in a zigzagged shape may be applied as well. The damper 400 illustrated in FIGS. 9A and 9B may also include a first portion 410 and a second portion 420. The first portion 410 may include a first end portion forming a fixed end, and the second portion 420 may include a second end portion 421 forming a free end. Similar to the damper 200 of FIGS. 7 and 8, the damper 400 may also have a length 'L' of the portion extending along the imaginary line drawn from the point C toward the second end portion 421 of the damper 400. According to an embodiment, similar to the damper 200 of FIGS. 7 and 8, the damper 400 may also be formed so that the imaginary line drawn from the point C toward the second end portion 421 of the damper 400 is inclined from the optical axis O-I.

As the dampers 200, 300, and 400 of the disclosure, any damper which has a shape in which the length is large as compared with its cross-sectional width, and may primarily absorb and/or disperse impact when contacting the camera housing 120 and, as its own shape bends or swells, secondarily absorb and/or disperse the impact may be included in the category of the disclosure.

FIG. 10 is a block diagram illustrating an electronic device in a network environment according to an embodiment of the disclosure.

Referring to FIG. 10, the electronic device 1001 in the network environment 1000 may communicate with at least one of an electronic device 1002 via a first network 1098 (e.g., a short-range wireless communication network), or an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module (SIM) 1096, or an antenna module 1097. In an embodiment, at least one (e.g., the connecting terminal 1078) of the components may be omitted from the electronic device 1001, or one or more other components may be added in the electronic device 101. According to an embodiment, some (e.g., the sensor module 1076, the camera module 1080, or the antenna module 1097) of the components may be integrated into a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 1001 includes the main processor 1021 and the auxiliary processor 1023, the auxiliary processor 1023 may be configured to use lower power than the main processor 1021 or to be specified for a designated function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 123. According to an embodiment, the auxiliary processor 1023 (e.g., the neural processing unit) may include a hardware structure specified for artificial intelligence model processing. The artificial intelligence model may be generated via machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by other component (e.g., the processor 1020) of the electronic device 1001, from the outside (e.g., a user) of the electronic device 1001. The input module 1050 may include, for example, a microphone, a mouse, a keyboard, keys (e.g., buttons), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display 1060 may include, for example, a display, a hologram device, or a projector and control circuitry to control a corresponding one of the display, hologram device, and projector. According to an embodiment, the display 1060 may include a touch sensor configured to detect a touch, or a pressure sensor configured to measure the intensity of a force generated by the touch.

The audio module 1070 may convert a sound into an electrical signal and vice versa. According to an embodiment, the audio module 1070 may obtain the sound via the input module 1050, or output the sound via the sound output module 1055 or a headphone of an external electronic device (e.g., the electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 101, and then generate an electrical signal or data value corresponding to the detected state. According to an embodiment, the sensor module 1076 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or motion) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to an embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via a first network 1098 (e.g., a short-range communication network, such as Bluetooth™, wireless-fidelity (Wi-Fi) direct, or infrared data association (IrDA)) or a second network 1099 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 1092 may identify or authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1097 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 1097 may include a plurality of antennas (e.g., an antenna array). In this case, at least one antenna appropriate for a communication scheme used in a communication network, such as the first network 1098 or the second network 1099, may be selected from the plurality of antennas by, e.g., the communication module 1090. The signal or the power may then be transmitted or received between the communication module 1090 and the external electronic device via the selected at least one antenna. According to an embodiment, other parts (e.g., radio frequency integrated circuit (RFIC)) than the radiator may be further formed as part of the antenna module 1097.

According to an embodiment, the antenna module 1097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 1001 and the external electronic device 1004 via the server 1008 coupled with the second network 1099. The external electronic devices 1002 or 1004 each may be a device of the same or a different type from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In an embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment(s) of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities. Some of the plurality of entities may be separately disposed in different components. According to embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

According to an embodiment of the disclosure, there may be provided an electronic device 1001 including a camera module 10. The camera module 10 may include a camera housing 120, a lens assembly 110 including at least one lens aligned along an optical axis O-I, a focus adjustment driver (AF driver) M1 configured to move the lens assembly in a direction of the optical axis, an image stabilization driver (OIS driver) M2, M3 configured to move the lens assembly in at least one direction crossing the optical axis, a frame 170 disposed in the camera housing and at least partially surrounding the focus adjustment driver M1 and/or the image stabilization driver M2, M3, and a damper 200, 300 including one end portion fixed to the frame or the camera housing and another end portion having a shape elongated toward the camera housing and configured to be bent in one direction based on the damper contacting the camera housing.

According to an embodiment, the damper 200, 300 may be disposed in a direction inclined from the optical axis.

According to an embodiment, the damper 200, 300 may configured to be bent in one direction based on the damper contacting the camera housing, and the damper isconf igured to return to an inclined orientation with respect to the optical axis based on disengagement from the camera housing.

According to an embodiment, the camera housing 120 may include a cover plate 122 including a front surface 122a facing in a first direction and a rear surface 122b facing in a second direction opposite to the first direction, and having an optical opening 121, and a side member 123 including a side surface 123a facing in a third direction substantially perpendicular to the first direction and the second direction and connected to the cover plate 122, and form a space capable of accommodating the lens assembly using the cover plate 122 and the side member 123.

According to an embodiment, a cross section of the camera module may be formed in a polygonal shape with more sides than a rectangle.

According to an embodiment, the damper 200, 300 may be disposed at a position corresponding to a remaining side surface except for a side surface corresponding to a position the image stabilization driver M2, M3 and a side surface corresponding to a position of the focus adjustment driver M1 of the camera module.

According to an embodiment, the frame 170 may include a first surface 172a facing the cover plate, and a second surface 173a facing the side member, and the damper 200 may be disposed on the second surface 173a of the frame.

According to an embodiment, the damper 200 may be configured to be spaced apart from the camera housing 120 by a predetermined distance (second gap g2) in an initial state of not contacting the camera housing 120.

According to an embodiment, the damper 300 may be disposed on an inner surface 123b of the camera housing 120.

According to an embodiment, the damper 300 may be configured to be spaced apart from the frame 170 by a predetermined distance (fourth gap g4) in an initial state of not contacting the frame 170.

According to an embodiment, the camera module 10 further may include an image sensor 130 configured to form an image from light passing through the at least one lens, and a PCB 131 on which the image sensor may be disposed.

According to an embodiment, the camera module 10 further may include a first carrier 140 configured to be fixedly disposed on the PCB 131.

According to an embodiment, the camera module 10 further may include a second carrier 150 overlapping the first carrier 140 and configured to be reciprocated in the optical axis direction.

According to an embodiment, the camera module 10 further may include a third carrier 160 overlapping the second carrier 150 and configured to be reciprocated in a direction crossing the optical axis.

According to an embodiment, the frame 170 may be fixedly coupled with the second carrier 150.

According to an embodiment, the damper 200 may at least partially include a portion 210 fixed to the frame and a portion 220 extending inclined from the optical axis and may be disposed in a space S1 between the second carrier 150 and the camera housing 120.

According to an embodiment, the damper 300 may at least partially include a portion 310 fixed to the camera housing and a portion 320 extending inclined with respect to the optical axis. The extending portion 320 may be disposed in a space S2 between the first carrier 140 and the second carrier 150.

According to an embodiment, the camera module 10 may include a focus adjustment driver and an image stabilization driver of a lens shift type.

According to an embodiment, the camera module 10 may include a focus adjustment driver and an image stabilization driver of an image sensor shift type.

According to an embodiment of the disclosure, there may be provided a camera module comprising a camera housing 120, a lens assembly including at least one lens aligned along an optical axis O-I, a carrier member configured to guide the lens assembly in an optical-axis direction and/or a direction crossing the optical axis, and a driving member M1, M2, M3 including at least one coil, and at least one magnet and a plurality of guide balls disposed to at least partially face the at least one coil, and moving the carrier member in the optical-axis direction and the direction crossing the optical axis in a ball bearing manner, a frame 170 disposed in the camera housing and at least partially surrounding the driving member M1, M2, M3, and a damper 200, 300 having one end portion fixed to the frame and another end portion having a shape elongated toward the camera housing and configured to be bent in one direction based on the damper contacting the camera housing.

According to an embodiment, the camera module 10 further may include an image sensor 130 configured to form an image from light passing through the at least one lens, and a PCB 131 on which the image sensor may be disposed.

According to an embodiment, the carrier member includes a first carrier 140 coupled with the first PCB and including a first opening 141 formed at a position overlapping the image sensor and a first plate 142 at least partially surrounding the first opening, and including a first side wall 143 protruding from the first plate in the optical-axis direction, a second carrier 150 disposed on the first carrier and including a second opening 151 formed at a position corresponding to the first opening and a second plate 152 at least partially surrounding the second opening, and including a second side wall protruding from the second plate in the optical-axis direction, and a third carrier 160 disposed on the second carrier.

According to an embodiment, the at least one driving member M1, M2, M3 may include a first driver M1 including a first coil 144 disposed on a 1-1th side wall 143a of the first side wall 143 and a first magnet 154 disposed at a position corresponding to the first coil on the second side wall 153 of the second carrier 150, a second driver M2 including a second coil 145 disposed on a 1-2th side wall 143b of the first side wall 143 and a second magnet 165 disposed at a position corresponding to the second coil, around the third carrier, and a third driver M3 including a third coil 146 disposed on a 1-3th side wall 143c of the first side wall 143 and a third magnet 166 disposed at a position corresponding to the second coil, around the third carrier.

According to an embodiment, the damper 200, 300 may be positioned at a position corresponding to a 1-4th side wall 143d of the first side wall 143.

While the disclosure has been described and shown in connection with various embodiments, it should be appreciated that various embodiments are intended as limiting the invention but as illustrative. It will be apparent to one of ordinary skill in the art that various changes may be made in form and detail without departing from the overall scope of the disclosure, including the appended claims and their equivalents. In the embodiments of FIGS. 1 to 19B, it has been described that the first driver M1, the second driver M2, and the third driver M3, respectively, are disposed on three different surfaces in the camera module 10 having a substantially rectangular cross section, and the auto-focus (AF) operation and image stabilization (OIS) operation are implemented based thereupon, but the disclosure is not limited thereto. For example, the camera module 10 may have a cross section in a shape (e.g., a polygon with five or more sides) other than the rectangle to have five or more surfaces and, accordingly, the positions of the first driver M1, the second driver M2, and the third driver M3 may be various. As another example, the shape of the damper 200 in the embodiments of FIGS. 1 to 9B described above may be varied according to embodiments.

**Claims**

1. An electronic device (1001) including a camera module (10), wherein the camera module (10) includes:

   a camera housing (120);
   a lens assembly (110) including at least one lens aligned along an optical axis (O-I);
   a focus adjustment driver (AF driver) (M1) configured to move the lens assembly in a direction of the optical axis;
   an image stabilization driver (OIS driver) (M2, M3) configured to move the lens assembly in at least one direction crossing the optical axis;
   a frame (170) disposed in the camera housing and at least partially surrounding the focus adjustment driver (M1) and/or the image stabilization driver (M2, M3); and
   a damper (200, 300) including one end portion fixed to the frame or the camera housing and another end portion having a shape elongated toward the camera housing and configured to be bent in one direction based on the damper contacting the camera housing.

2. The electronic device of claim 1, wherein the damper (200, 300) is disposed in a direction inclined from the optical axis.

3. The electronic device of claim 2, wherein the damper (200, 300) is configured to be bent in one direction based on the damper contacting the camera housing, and
   wherein the damper is configured to return to an inclined orientation with respect to the optical axis based on disengagement from the camera housing.

4. The electronic device of any one of claims 1 to 3, wherein the camera housing (120) includes:

   a cover plate (122) including a front surface (122a) facing in a first direction and a rear surface (122b) facing in a second direction opposite to the first direction, and having an optical opening (121); and
   a side member (123) including a side surface (123a) facing in a third direction substantially perpendicular to the first direction and the second direction and connected to the cover plate (122), and

   wherein a space capable of accommodating the lens assembly is formed using the cover plate (122) and the side member (123).

5. The electronic device of claim 4, wherein the damper (200, 300) is disposed at a position corresponding to a remaining side surface except for a side surface corresponding to a position the image stabilization driver (M2, M3) and a side surface corresponding to a position of the focus adjustment driver (M1) of the camera module among side surfaces (123a) of the side member (123).

6. The electronic device of claim 4 or 5, wherein the frame (170) includes:

   a first surface (172a) facing the cover plate; and
   a second surface (173a) facing the side member, and
   wherein the damper (200) is disposed on the second surface (173a) of the frame.

7. The electronic device of any one of claims 1 to 6, wherein the damper (200) is configured to be spaced apart from the camera housing (120) by a predetermined distance (second gap (g2)) in an initial state of not contacting the camera housing (120).

8. The electronic device of claim 4 or 5, wherein the damper (300) is disposed on an inner surface (123b) of the camera housing (120).

9. The electronic device of claim 8, wherein the damper (300) is configured to be spaced apart from the frame (170) by a predetermined distance (fourth gap (g4)) in an initial state of not contacting the frame (170).

10. The electronic device of any one of claims 1 to 9, wherein the camera module (10) further includes:

    an image sensor (130) configured to form an image from light passing through the at least one lens; and
    a PCB (131) on which the image sensor is disposed.

11. The electronic device of claim 10, wherein the camera module (10) further includes a first carrier (140) configured to be fixedly disposed on the PCB (131).

12. The electronic device of claim 11, wherein the camera module (10) further includes a second carrier (150) overlapping the first carrier (140) and configured to be reciprocated in the optical axis direction.

13. The electronic device of claim 12, wherein the camera module (10) further includes a third carrier (160) overlapping the second carrier (150) and configured to be reciprocated in a direction crossing the optical axis.

14. The electronic device of claim 12, wherein the damper (200) at least partially includes a portion (210) fixed to the frame and a portion (220) extending inclined from the optical axis, and wherein the extending portion (220) is disposed in a space (S1) between the second carrier (150) and the camera housing (120).

15. The electronic device of claim 12, wherein the damper (300) at least partially includes a portion (310) fixed to the camera housing and a portion (320) extending inclined with respect to the optical axis, and wherein the extending portion (320) is disposed in a space (S2) between the frame (170) and the second carrier (150).

FIG. 1

FIG. 2

# FIG. 3

FIG. 4

FIG. 5A

FIG. 5B

FIG. 6A

FIG. 6B

FIG. 7

FIG. 8

FIG. 9A

FIG. 9B

FIG. 10

EP 4 625 037 A1

## INTERNATIONAL SEARCH REPORT

| International application No. |
| --- |
| **PCT/KR2023/019138** |

| A. | CLASSIFICATION OF SUBJECT MATTER |
| --- | --- |

G03B 17/02(2006.01)i; G03B 3/10(2006.01)i; G03B 13/34(2006.01)i; G03B 5/06(2006.01)i; H04N 23/54(2023.01)i; H04N 23/55(2023.01)i; G03B 13/36(2006.01)i; G03B 17/12(2006.01)i

According to International Patent Classification (IPC) or to both national classification and IPC

| B. | FIELDS SEARCHED |
| --- | --- |

Minimum documentation searched (classification system followed by classification symbols)

G03B 17/02(2006.01); G02B 27/64(2006.01); G02B 7/02(2006.01); G02B 7/04(2006.01); G03B 17/12(2006.01); G03B 3/10(2006.01); G03B 5/00(2006.01); G03B 5/04(2006.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 렌즈(lens), 자동 초점(auto focus), 이미지 안정화(image stabilizer), 댐퍼(damper)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2019-0061439 A (SAMSUNG ELECTRO-MECHANICS CO., LTD.) 05 June 2019 (2019-06-05) See paragraphs [0021]-[0030], claim 1 and figures 1-4. | 1-5 |
| Y | KR 10-2012-0138281 A (SAMSUNG ELECTRO-MECHANICS CO., LTD.) 26 December 2012 (2012-12-26) See paragraphs [0031]-[0036] and [0052], claims 2-3 and figures 3-5. | 1-5 |
| A | KR 10-2013-0055135 A (LG INNOTEK CO., LTD.) 28 May 2013 (2013-05-28) See paragraphs [0043]-[0050] and figures 1-4. | 1-5 |
| A | KR 10-2022-0015482 A (LG INNOTEK CO., LTD.) 08 February 2022 (2022-02-08) See paragraphs [0119]-[0135] and figures 19-26. | 1-5 |
| A | KR 10-2022-0102502 A (JAHWA ELECTRONICS CO., LTD.) 20 July 2022 (2022-07-20) See paragraphs [0131]-[0140] and figure 13. | 1-5 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 March 2024** | **06 March 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2023/019138** |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☑ Claims Nos.: **9,11-15**
   because they relate to parts of the international application that do not comply with the prescribed requirements to such an extent that no meaningful international search can be carried out, specifically:

   Claims 9 and 11-15 refer to claims violating the manner of referring to dependent claims under PCT Rule 6.4(a),
   and thus are unclear.

3. ☑ Claims Nos.: **6-8,10**
   because they are dependent claims and are not drafted in accordance with the second and third sentences of Rule 6.4(a).

Form PCT/ISA/210 (continuation of first sheet) (July 2022)

**INTERNATIONAL SEARCH REPORT**
Information on patent family members

International application No.

**PCT/KR2023/019138**

| Patent document cited in search report | | | Publication date (day/month/year) | Patent family member(s) | | | Publication date (day/month/year) |
|---|---|---|---|---|---|---|---|
| KR | 10-2019-0061439 | A | 05 June 2019 | KR | 10-2457389 | B1 | 21 October 2022 |
| KR | 10-2012-0138281 | A | 26 December 2012 | JP | 2013-003574 | A | 07 January 2013 |
| | | | | JP | 5652670 | B2 | 14 January 2015 |
| | | | | US | 2012-0320467 | A1 | 20 December 2012 |
| | | | | US | 8995068 | B2 | 31 March 2015 |
| KR | 10-2013-0055135 | A | 28 May 2013 | KR | 10-1943405 | B1 | 29 January 2019 |
| | | | | US | 2014-0267767 | A1 | 18 September 2014 |
| | | | | US | 9294661 | B2 | 22 March 2016 |
| | | | | WO | 2013-073822 | A1 | 23 May 2013 |
| KR | 10-2022-0015482 | A | 08 February 2022 | KR | 10-2023-0034276 | A | 09 March 2023 |
| | | | | KR | 10-2505840 | B1 | 03 March 2023 |
| KR | 10-2022-0102502 | A | 20 July 2022 | WO | 2022-154244 | A1 | 21 July 2022 |

Form PCT/ISA/210 (patent family annex) (July 2022)